# EUROPÄISCHE PATENTSCHRIFT

(11) **EP 1 629 604 B1**
(45) Veröffentlichungstag und Bekanntmachung des Hinweises auf die Patenterteilung: **12.10.2011**
(21) Anmeldenummer: 04730547.9
(22) Anmeldetag: 30.04.2004
(51) Int. Cl.: H04B 1/08

(54) **MULTIMEDIAENDGERAET**
MULTIMEDIA TERMINAL
TERMINAL MULTIMEDIA

(30) Priorität: 23.05.2003 DE 10323467
(43) Veröffentlichungstag der Anmeldung: 01.03.2006
(73) Patentinhaber: ROBERT BOSCH GMBH, 70442 Stuttgart (DE)
(72) Erfinder: ZUEHLSDORFF, Sven, 30171 Hannover (DE)
(86) Internationale Anmeldenummer: PCT/EP2004/050668
(87) Internationale Veröffentlichungsnummer: WO 2004/105262

(56) Entgegenhaltungen:
- DE-A- 10 049 848
- DE-A- 19 648 910
- US-A- 5 867 774
- Dezember 2001 (2001-12), SONY ERICSSON R380 USER'S MANUAL , XP002298803 Gefunden im Internet: URL:http://www.sonyericsson.com/spg.jsp?cc =us&lc=en&ver=4000&template=ps1_1_2_2_1&zo ne=ps&lm=ps1_1&pid=9494&fid=1532> [gefunden am 2004-09-30] * Seiten 9-10,22-25 *

## Beschreibung

Die Erfindung betrifft ein Multimediaendgerät, insbesondere ein Autoradio, mit einer Anzeigeeinheit und einer Bedieneinheit, wobei die Bedieneinheit von dem Multimediaendgerät abnehmbar ist und Bedienelemente zur Steuerung des Multimediaendgerätes hat.

Es sind Autoradios hinreichend bekannt, bei denen eine Bedieneinheit mit zur Steuerung des Autoradios notwendigen Bedienelementen, wie z.B. Stationstasten, von der Front des Autoradios abnehmbar ist. Die abnehmbare Bedieneinheit kann schnell und einfach eingesetzt und abgenommen werden und auf diese Weise ein Diebstahl des ohne Bedieneinheit nicht funktionsfähigen Autoradios verhindert werden.

Weiterhin sind Fernbedienungen hinreichend bekannt, die zur Steuerung diverser Funktionen separat von dem Multimediaendgerät sind. Die Fernbedienungen zur Steuerung von Autoradios können beispielsweise im Lenkrad, an einem separaten Schwanenhals oder in die Mittelkonsolenablage eines Fahrzeugs eingebaut sein oder dort aufbewahrt werden. Aufgrund der unterschiedlichen Einbausituationen und Platzverhältnisse verschiedener Fahr-zeugtypen ist nachteilig kein universell einsetzbarer Montageort für nachrüstbare Fernbedienungen vorhanden.

Zudem sind für den Diebstahlschutz raumgreifende Einrichtungen am Autoradio erforderlich, wie beispielsweise ein Releasepanel, eine Releasetaste und ein Releasemechanismus.

Bei den herkömmlichen Multimediaendgeräten besteht weiterhin das Problem, dass die Größe der verfügbaren Anzeigeeinheit durch die zur Bedienung notwendige Anzahl von Bedienelementen der Bedieneinheit stark eingeschränkt ist. Hieraus resultiert, dass die Anzeigeeinheit in der Regel relativ klein und damit schlecht ablesbar ist und nur eine geringe Anzahl von Informationen darstellen kann. Dabei haben unterschiedliche Benutzergruppen unterschiedliche Anforderungen an die Bedienung und die Größe und den Inhalt der Anzeigeeinheit. Der ungeübte Benutzer benötigt nur die zur Bedienung notwendigen Informationen. Hingegen ist ein fortgeschrittener oder technisch versierter Benutzer in der Lage, wesentlich komplexere Bediensituationen zu beherrschen, insbesondere Menü-Strukturen einer Bedienoberfläche zu folgen. Hierzu ist eine größere Anzeigeeinheit erforderlich, um weitergehende Informationen anzuzeigen, wie z. B. die Menü-Struktur.

Aus der DE 196 48 910 A1, der DE 100 49 848 A1 und der US 5,867,774 sind elektronische Geräte mit abnehmbaren Bedieneinheiten bekannt, wobei die Bedieneinheit eine drahtlose Fernübertragungseinheit aufweist.

Aufgabe der Erfindung ist es daher, ein verbessertes Multimediaendgerät mit abnehmbarer Bedieneinheit zu schaffen, das universell einsetzbar ist, einen Diebstahl vorbeugt und an die Anforderungen unterschiedlicher Benutzergruppen angepasst ist.

Die Aufgabe wird mit dem Multimediaendgerät gemäß Anspruch 1 gelöst. Hierbei hat die Bedieneinheit eine Fernübertragungseinheit zur drahtlosen Übertragung von Steuersignalen an das Multimediaendgerät, die durch Betätigung der Bedienelemente generierbar sind.

Durch die Ausführung der abnehmbaren Bedieneinheit als Fernbedienung mit Hilfe der Fernübertragungseinheit wird sowohl ein Diebstahlschutz als auch eine universell einsetzbare Fernbedienung bereitgestellt. Die Fernbedienung erhöht den verfügbaren Platz für die Anzeigeeinheit, wenn die Fernbedienung vom Multimediaendgerät abgenommen ist. Damit können dem fortgeschrittenen Benutzer mehr Informationen bereitgestellt werden, als einem ungeübten Benutzer, der das Multimediaendgerät ohne Fernbedienung mit an das Multimediaendgerät angekoppelter Bedieneinheit benutzt.

Gemäß Anspruch 1 sind Kontaktelemente an einer Bedienfront des Multimediaendgerätes für die Bedieneinheit derart angeordnet, dass das Bedienelement an den Kontaktelementen lösbar mechanisch und elektrisch an das Multimediaendgerät befestigbar ist. Damit kann die Bedieneinheit leicht an die Bedienfront angeklemmt und gleichzeitig elektrisch kontaktiert werden, ohne dass weitere raumgreifende Einrichtungen erforderlich sind.

Gemäß Anspruch 1 ist vorgesehen, dass die Bedieneinheit die Anzeigeeinheit teilweise überdeckt und das Multimediaendgerät zur Umschaltung der Anzeigeeinheit auf einen reduzierten Anzeigemodus ausgebildet ist, wenn die Bedieneinheit an dem Multimediaendgerät befestigt ist. Damit wird eine automatische Umschaltung von einem Betriebsmodus z. B. für fortgeschrittene Benutzer auf einen Betriebsmodus für ungeübte Benutzer bereitgestellt, wenn die Bedieneinheit auf die Bedienfront aufgeklemmt wird. Die Bedieneinheit bildet dann einen integralen Teil des Multimediaendgerätes, der die verfügbare Fläche der Anzeigeeinheit einschränkt. Durch den reduzierten Anzeigemodus werden dennoch die zur Bedienung notwendigen Informationen für den Benutzer sichtbar angezeigt, ohne dass diese von der Bedieneinheit verdeckt werden.

Die Anzeigeeinheit ist dabei vorzugsweise zur Darstellung von Steuerbefehlen ausgebildet, die unmittelbar angrenzenden Bedienelementen der an die Bedienfront vor die Anzeigeeinheit gekoppelten Bedieneinheit zugeordnet sind. Damit können die Bedienelemente durch die Anzeigeeinheit universell beschriftet werden und sogenannte Softkeys ausbilden. Im aufgesteckten Zustand der Bedieneinheit gibt die Beschriftung auf der Anzeigeeinheit jeweils neben den Bedienelementen der Bedieneinheit die jeweilige Bedeutung bzw. Funktion der Softkey-Taste wieder. Dabei kann ein Leuchtpunkt am Rande jeder Softkey-Taste vorgesehen sein, um die Zuordnung der Beschriftung zu der Softkey-Taste zu verdeutlichen.

Im entnommenen Zustand der Bedieneinheit (Fernbedienungsfunktion) schaltet sich die beispielsweise mit LED realisierte Leuchtpunkt-Tastenbeschriftung auf eine Textinformation um, die unmittelbar auf dem Bedienelement angeordnet ist. Das Softkey-Prinzip ist so deaktiviert und die Bedienung erfolgt nun ausschließlich über die in ihrer Funktion festgelegten Bedienelemente der Bedieneinheit.

Dies hat den weiteren Vorteil, dass die Zuordnung der Steuerfunktionen zu den Bedienelementen veränderbar ist, z. B. wenn eine Menü-Struktur durchlaufen wird.

Besonders vorteilhaft ist es, wenn eine von dem Multimediaendgerät separate und mit dem Multimediaendgerät verdrahtete Koppeleinheit zur mechanischen und elektrischen Aufnahme der Bedieneinheit vorgesehen ist. Eine solche Koppeleinheit kann beispielsweise eine an beliebiger Position im Kraftfahrzeug, z. B. in der Mittelkonsole, befestigte Aufnahmestation für die Bedieneinheit sein, wobei die Stromversorgung der Bedieneinheit und die Übertragung der Steuersignale von der Koppeleinheit zum Multimediaendgerät über Kabel sichergestellt wird.

Die Fernübertragungseinheit kann eine drahtlose Funkschnittstelle oder vorzugsweise eine Infrarotschnittstelle oder ähnliches haben.

Die Erfindung wird nachfolgend beispielhaft anhand der beigefügten Zeichnungen näher erläutert. Es zeigen:
- Fig. 1: - eine Frontansicht eines Autoradios mit angekoppelter Bedieneinheit vor der Anzeigeeinheit;
- Fig. 2: - eine Frontansicht des Autoradios aus Figur 1 mit abge nommener Bedieneinheit;
- Fig. 3: - eine Frontansicht der Bedieneinheit aus der Figur 1.

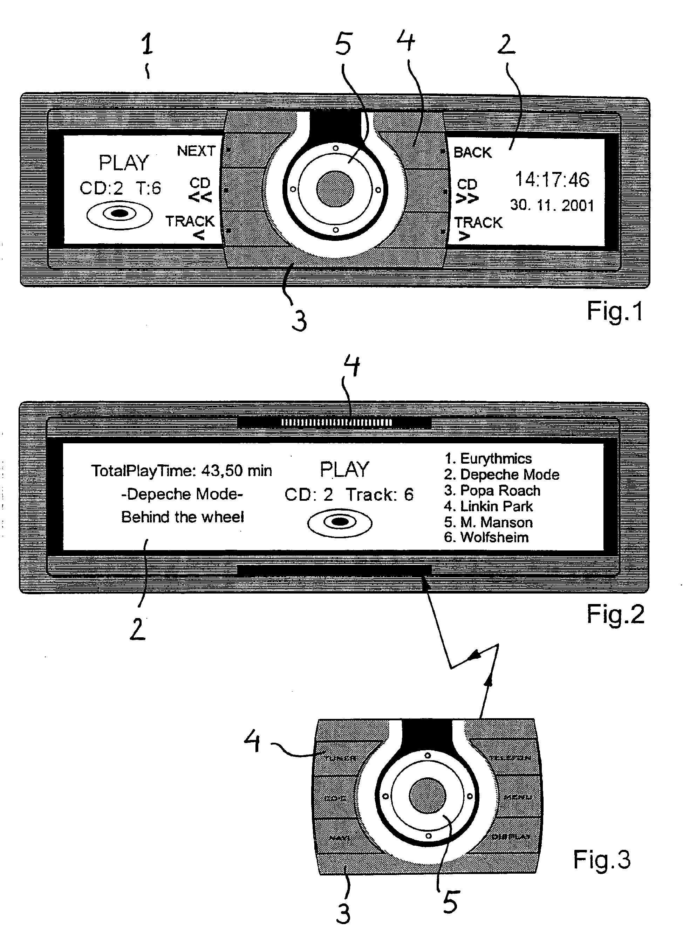

Die Figur 1 lässt eine Frontansicht eines Autoradios 1 erkennen, dessen Bedienfront im Wesentlichen durch eine Anzeigeeinheit 2 gebildet ist. Auf die Anzeigeeinheit 2 ist eine Bedieneinheit 3 als abnehmbare Fernbedienung aufsteckbar, die mit in der Figur 2 dargestellten Kontaktelementen 4 lösbar mechanisch und elektrisch mit dem Autoradio 1 verbunden wird. Die Bedieneinheit 3 hat mehrere Bedienelemente 4 in Form von Tasten sowie vorzugsweise einen Drehgeber 5, mit dem beispielsweise das Durchlaufen einer Menü-Struktur gesteuert werden kann, der aber auch zur Lautstärkeregelung etc. einsetzbar ist.

In dem in der Figur 1 dargestellten Zustand, bei dem die Bedieneinheit 3 auf die Bedienfront des Autoradios 1 aufgesteckt ist, ist die Anzeigeeinheit 2 in den reduzierten Anzeigemodus geschaltet. Dabei sind die dargestellten Informationen auf ein zur Bedienung durch einen ungeübten Benutzer notwendiges Maß reduziert. Unmittelbar neben den Bedienelemente 4 werden durch die Anzeigeeinheit 2 zudem Steuerbefehle angezeigt, wie "NEXT", "CD«", "TRACK<", "BACK", "CD>>" und "TRACK>" für das Vorwärts- und Rückwärtsspulen bei der Wiedergabe einer Compact-Disc bzw. für die Auswahl des nächsten oder vorhergehenden Titels. Auf diese Weise können den Bedienelementen 4 jeweils unterschiedliche Steuerbefehle zugeordnet werden, je nachdem welche Funktionalität des Multimediaendgerätes benötigt wird.

Die Figur 2 lässt die Frontansicht des Autoradios 1 aus der Figur 1 mit abgenommener Bedieneinheit 3 erkennen. Dabei ist die Anzeigeeinheit 2 in einen erweiterten Anzeigemodus geschaltet. Es ist erkennbar, dass nunmehr die vollständige Fläche der Anzeigeeinheit genutzt wird, um weitergehende Informationen darzustellen. Dies kann beispielsweise eine Menüstruktur sein, oder wie im dargestellten Beispiel, die Titel einer auf einer Compact-Disc gespeicherten Musikstücke.

Die Figur 3 lässt die von dem Autoradio 1 abgenommene Bedieneinheit 3 erkennen. Sie verfügt über eine nicht dargestellte Femübertragungseinheit, mit der Steuersignale, die durch Betätigung der Bedienelemente 4 generiert werden, an das Autoradio 1 übertragen werden. Damit ist die Bedieneinheit 3 nicht nur zum Diebstahlschutz in herkömmlich bekannter Weise abnehmbar, sondern gleichzeitig auch als Fernbedienung einsetzbar. Die Femübertragungseinheit kann beispielsweise als Funkschnittstelle oder Infrarot-schnittstelle oder Ähnliches ausgebildet sein. Hierzu sind in der Bedieneinheit 3 ein entsprechender Fernübertragungssender und in dem Autoradio 1 ein entsprechender Fernübertragungsempfänger integriert.

Optional kann noch eine zusätzliche Koppeleinheit in ein Kraftfahrzeug, beispielsweise in der Mittelkonsole, integriert sein, um die Bedieneinheit 3 aufzunehmen. Die Koppeleinheit hat einen Stromversorgungsanschluss, um die Bedieneinheit 3 mit Strom zu versorgen und kann zusätzlich eine Kabelverbindung zu dem Autoradio 1 herstellen. Durch Anklemmen der Bedieneinheit 3 auf die Koppeleinheit wird ein für den Fahrer bequemer Bedienplatz bereitgestellt und dabei die vollständige Anzeigeeinheit 2 verfügbar gemacht. Beim Verlassen des Fahrzeugs wird die Bedieneinheit 3 einfach von dem Autoradio 1 oder der separaten nicht dargestellten Koppeleinheit abgenommen und mitgenommen. Dadurch, dass das Autoradio 1 ohne die Bedieneinheit 3 nicht bedienbar ist, dient die Mitnahme der Bedieneinheit 3 als Diebstahlschutz.

## Patentansprüche

1. Multimediaendgerät, insbesondere Autoradio (1), mit einer Anzeigeeinheit (2) und einer Bedieneinheit (3), wobei die Bedieneinheit (3) von dem Multimediaendgerät abnehmbar ist und Bedienelemente (4) zur Steuerung des Multimediaendgerätes hat, wobei die Bedieneinheit (3) eine Fernübertragungseinheit zur drahtlosen Übertragung von durch Betätigung der Bedienelemente (4) generierbaren Steuersignalen an das Multimediaendgerät hat, und Kontaktelemente an einer Bedienfront des Multimediaendgerätes für die Bedieneinheit (3) derart angeordnet sind, dass die Bedieneinheit (3) an den Kontaktelementen lösbar mechanisch und elektrisch an dem Multimediaendgerät befestigbar ist, **dadurch gekennzeichnet, dass** die Bedienfront die Anzeigeeinheit (2) aufweist und das Bedienelement (4) die Anzeigeeinheit (2) teilweise überdeckt und das Multimediaendgerät zur Umschaltung der Anzeigeeinheit (2) auf einen reduzierten Anzeigemodus ausgebildet ist, wenn die Bedieneinheit (3) an dem Multimediaendgerät befestigt ist.

2. Multimediaendgerät nach Anspruch 1, **dadurch gekennzeichnet, dass** die Anzeigeeinheit (2) zur Darstellung von Steuerbefehlen ausgebildet ist, die unmittelbar angrenzenden Bedienelementen (4) der an die Bedienfront vor die Anzeigeeinheit (2) gekoppelten Bedieneinheit (3) zugeordnet sind.

3. Multimediaendgerät nach einem der vorhergehenden Ansprüche, **gekennzeichnet durch** eine von dem Multimediaendgerät separat und mit dem Multimediaendgerät verdrahtete Koppeleinheit zur mechanischen und elektrischen Aufnahme der Bedieneinheit (3).

4. Multimediaendgerät nach einem der vorhergehenden Ansprüche, **dadurch gekennzeichnet, dass** die Fernübertragungseinheit eine Infrarot-Schnittstelle hat.

## Claims

1. Multimedia terminal, particularly a car radio (1), having a display unit (2) and an operator control unit (3), wherein the operator control unit (3) can be removed from the multimedia terminal and has operator control elements (4) for controlling the multimedia terminal, wherein the operator control unit (3) has a remote transmission unit for wirelessly transmitting control signals, which can be generated by operating the operator control elements (4), to the multimedia terminal, and contact elements are arranged on a front operator control panel of the multimedia terminal for the operator control unit (3) such that the operator control unit (3) can be detachably mounted on the multimedia terminal mechanically and electrically by means of the contact elements, **characterized in that** the front operator control panel has the display unit (2), and the operator control element (4) partially covers the display unit (2), and the multimedia terminal is designed to change over the display unit (2) to a reduced display mode when the operator control unit (3) is mounted on the multimedia terminal.

2. Multimedia terminal according to Claim 1, **characterized in that** the display unit (2) is designed to present control commands which are associated with directly adjacent operator control elements (4) of the operator control unit (3) coupled to the front operator control panel in front of the display unit (2).

3. Multimedia terminal according to one of the preceding claims, **characterized by** a coupling unit, which is separate from the multimedia terminal and which is wired to the multimedia terminal, for mechanically and electrically holding the operator control unit (3).

4. Multimedia terminal according to one of the preceding claims, **characterized in that** the remote transmission unit is an infrared interface.

## Revendications

1. Terminal multimédia, en particulier autoradio (1),
doté d'une unité d'affichage (2) et d'une unité de commande (3),
l'unité de commande (3) pouvant être retirée du terminal multimédia et présentant les éléments de commande (4) qui commandent le terminal multimédia,
l'unité de commande (3) possédant une unité de transmission à distance qui permet de transmettre sans fil au terminal multimédia des signaux de commande aptes à être générés par actionnement des éléments de commande (4),
des éléments de contact étant prévus pour l'unité de commande (3) sur un panneau de commande du terminal multimédia de telle sorte que l'unité de commande (3) puisse être fixée de manière libérable mécaniquement et électriquement par les éléments de contact au terminal multimédia,
**caractérisé en ce que**
le panneau de commande présente l'unité d'affichage (2) et l'élément de commande (4) recouvrant en partie l'unité d'affichage (2) et
**en ce que** le terminal multimédia est configuré pour faire basculer l'unité d'affichage (2) en un mode d'affichage réduit lorsque l'unité de commande (3) est fixée sur le terminal multimédia.

2. Terminal multimédia selon la revendication 1, **caractérisé en ce que** l'unité d'affichage (2) est configurée pour présenter des ordres de commande qui sont associés à des éléments de commande (4) directement adjacents de l'unité de commande (3) couplée au panneau de commande en avant de l'unité d'affichage (2).

3. Terminal multimédia selon l'une des revendications précédentes, **caractérisé par** une unité d'accouplement séparée du terminal multimédia et reliée par fils au terminal multimédia pour reprendre mécaniquement et électriquement l'unité de commande (3).

4. Terminal multimédia selon l'une des revendications précédentes, **caractérisé en ce que** l'unité de transmission à distance possède une interface infrarouge.
